# EUROPÄISCHE PATENTSCHRIFT

(11) **EP 4 182 487 B1**
(45) Veröffentlichungstag und Bekanntmachung des Hinweises auf die Patenterteilung: **02.12.2026**
(21) Anmeldenummer: 21734794.7
(22) Anmeldetag: 17.06.2021
(51) Int. Cl.: C22B 5/10, C22B 7/00, C22B 15/00

(54) **VERFAHREN ZUR GEWINNUNG VON NICHTEISENMETALLEN, INSBESONDERE VON SCHWARZ- UND/ODER ROHKUPFER, AUS ORGANIK-HALTIGEN SCHROTTEN**
METHOD FOR OBTAINING NON-FERROUS METALS, MORE PARTICULARLY BLACK AND/OR RAW COPPER, FROM SCRAP CONTAINING ORGANIC MATTER
PROCÉDÉ D'OBTENTION DE MÉTAUX NON FERREUX, PLUS PARTICULIÈREMENT DE CUIVRE NOIR ET/OU BRUT, À PARTIR DE DÉCHETS CONTENANT DE LA MATIÈRE ORGANIQUE

(30) Priorität: 14.07.2020 DE 102020208774
(43) Veröffentlichungstag der Anmeldung: 24.05.2023
(73) Patentinhaber: SMS group GmbH, 41069 Mönchengladbach (DE)
(72) Erfinder: DEGEL, Rolf, 40880 Ratingen (DE); LUX, Timm, 40668 Meerbusch (DE); KAUSSEN, Frank Marlin, 52066 Aachen (DE); BOROWSKI, Nikolaus Peter Kurt, 40489 Düsseldorf (DE)
(74) Vertreter: Richly & Ritschel Patentanwälte PartG mbB
(86) Internationale Anmeldenummer: PCT/EP2021/066456
(87) Internationale Veröffentlichungsnummer: WO 2022/012851

(56) Entgegenhaltungen:
- WO-A1-86/05211
- US-A- 4 606 760
- US-A- 4 740 240
- US-A- 4 961 784

## Beschreibung

Die vorliegende Erfindung betrifft ein Verfahren sowie eine Anlage zur Gewinnung von Nichteisenmetallen, insbesondere von Schwarz- und/oder Rohkupfer, aus organik-haltigen Schrotten.

Derartige Verfahren zur Wiedergewinnung von Wertstoffen sind aus dem Stand der Technik grundsätzlich bekannt.

So offenbart die europäische Patentanmeldung EP 1 609 877 A1 ein Verfahren zur chargenweisen Aufbereitung metallhaltiger Reststoffe, wie insbesondere auch Elektroschrott, in einem rotierenden Reaktor. Das Einsatzgut, d. h. insbesondere der Elektroschrott besteht im Wesentlichen aus Fraktionen solcher Größe, die ein kontinuierliches Beladen während des Betriebs erlauben. In dem Reaktor wird das Material eingeschmolzen, so dass ein aufbereitetes Produkt entsteht, welches im Wesentlichen frei von jeder organischen Substanz ist, weil der ursprüngliche organische Anteil an dem Einsatzgut während des Einschmelzens verbrennt.

Weiterhin offenbart die EP 0 070 819 B1 ein Verfahren zur Umwandlung metallhaltiger Abfallprodukte mit einem hohen Anteil an organischen Substanzen, wie beispielsweise Kabelabfälle und Abfälle von elektronischen Ausrüstungen, in ein Produkt, aus welchem ein Wertmetall leicht gewonnen werden kann. Hierzu werden die Abfallprodukte in einen rotierenden Reaktorkessel aufgegeben und sodann erhitzt, um die organischen Bestandteile in der Form eines verbrennbaren Gases auszutreiben, welches sodann außerhalb des Reaktorkessels verbrannt wird.

Ein weiteres Verfahren zum Recyceln von kupferhaltigen Elektroschrotten offenbart die Veröffentlichung von Gerardo et al., ISASMELT™ for the Recycling of E-Scrap and Copper in the U.S. Case Study Example of a New Compact Recycling Plant, The Minerals, Metals & Materials Society, DOI 10.1007/s11837-014-0905-3. Die Patentdokumente US 4 740 240 A, US 4 606 760 A und WO 86/0511 A1 offenbaren außerdem ein Verfahren zur Gewinnung von Nichteisenmetallen.

Vor diesem Hintergrund liegt der vorliegenden Erfindung die Aufgabe zu Grunde ein, gegenüber dem Stand der Technik, verbessertes Verfahren sowie eine verbesserte Anlage zur Gewinnung von Nichteisenmetallen, insbesondere von Schwarz- und/oder Rohkupfer, aus organik-haltigen Schrotten anzugeben.

Erfindungsgemäß wird diese Aufgabe durch ein Verfahren mit den Merkmalen des Patentanspruchs 1 sowie durch eine Anlage mit den Merkmalen des Patentanspruchs 10 gelöst.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Verfahren zur Gewinnung von Nichteisenmetallen, insbesondere von Schwarz- und/oder Rohkupfer, aus organik-haltigen Schrotten, umfasst die Schritte:
i) Bereitstellen eines Schmelzreaktors, wobei der Schmelzreaktor derart konfiguriert ist, dass dieser zumindest einen Schmelzbereich, einen Verbrennungsbereich sowie einen Pyrolysebereich aufweist,
ii) Beschicken des Schmelzreaktors mit einer Mischung umfassend den organik-haltigen Schrott, derart, dass dieser vor dem Erreichen des Schmelzbereiches zunächst den Pyrolysebereich und den Verbrennungsbereich passiert und zumindest zu einem Teil vorpyrolisiert und/oder verbrannt wird, so dass ein energie-haltiger Gasstrom gebildet wird,
iii) Überführen des energie-haltigen Gasstroms in eine thermische Nachverbrennungskammer, in der der energie-haltige Gasstrom vollständig verbrannt und die bei der Verbrennung freigesetzte Wärmeenergie über eine Energierückgewinnungseinheit abgeführt wird, und
iv) Einschmelzen des zumindest zu einem Teil vorpyrolisierten und/oder verbrannten organik-haltigen Schrottes.

Der vorliegenden Erfindung liegt die wesentliche Erkenntnis zugrunde, dass durch das Einschmelzen von hochenergetischen Schrotten, die sich durch einen hohen Anteil an Organik auszeichnen, ein sehr hoher Energieeintrag in den Schmelzprozess eingebracht wird, der den Schmelzreaktor oder die Anlage stark angreift, zu einem erhöhten Verschleiß führt und zu einem großen Teil mit dem Abgas ungenutzt verlässt. Durch den erfindungsgemäßen und spezifischen Verfahrensansatz wird der ungenutzte Energieüberschuss gezielt zurückgewonnen und der gesamte Recyclingprozess energietechnisch optimiert. Weiterhin der Verschleiß des Schmelzreaktor oder der Anlage reduziert.

Erfindungsgemäß wird der Schmelzreaktor mit der Mischung umfassend den organik-haltigen Schrott derart beschickt, dass dieser vor dem Erreichen des Schmelzbereiches zunächst den Pyrolysebereich und den Verbrennungsbereich passiert und zumindest zu einem Teil vorpyrolisiert und/oder verbrannt wird. Der hierbei gebildete energie-haltige Gasstrom wird sodann direkt in eine thermische Nachverbrennungskammer überführt und dort vollständig verbrannt. Hierdurch wird ein geringerer Energieeintrag in der Schmelze erreicht, der sich vorteilhaft auf die Regulierung des Schmelzprozesses auswirkt. Die in der Nachverbrennung freigesetzte Wärmeenergie wird über die Energierückgewinnungseinheit, die vorzugsweise einen Verdampfer oder einen Wärmetauscher umfasst, abgeführt, und kann beispielsweise zur Erzeugung von Sattdampf oder CO₂ neutraler elektrischer Energie genutzt werden.

Die Temperatur im Pyrolysebereich weist mindestens 180 °C, bevorzugt mindestens 420 °C, mehr bevorzugt mindestens 800 °C, und am meisten bevorzugt mindestens 900 °C auf. Eine zu kleine Temperatur wirkt sich nachteilig auf den angestrebten Pyrolyseprozess aus, da ein zu geringer Anteil der organischen Komponente des eingesetzten Schrottes pyrolysiert wird und demnach ein zu hoher organischer Anteil die Schmelze erreicht. Die Temperatur darf aber eine maximale Temperatur nicht überschreiten, da ein spezifischer Anteil der organischen Komponente als Brennmittel für die Schmelze erforderlich ist, um den Recyclingprozess energietechnisch im optimalen Bereich betreiben zu können. Die Temperatur darf zudem, aufgrund der Beschaffenheit des Schmelzreaktors, nicht zu hoch sein, da diese zu einem ungewünschten Verschleiß des Schmelzreaktors führen würde. Vorteilhafterweise beträgt die maximale Temperatur daher 1500 °C, bevorzugt 1400 °C, mehr bevorzugt 1300 °C, und am meisten bevorzugt maximal 1200 °C.

Vorteilhafterweise wird der organik-haltige Schrott dem Schmelzreaktor im Gegenstrom zum energiegeladenen inerten-Gasstrom zugeführt. Hierdurch verlangsamt sich die Fallgeschwindigkeit der einzelnen Partikel, da diese von dem Gasstrom umströmt werden. Grundsätzlich gilt, dass bei Betrachtung einzelner Partikel diese sich relativ leicht erwärmen lassen sollten, um die Pyrolysegase leicht abgeben zu können. So würde sich beispielsweise eine zu geringe Verweilzeit nachteilig auf den angestrebten Pyrolyseprozess auswirken, da ein zu geringer Anteil der organischen Komponente pyrolysiert wird und demnach ein zu hoher organischer Anteil die Schmelze erreicht. Anderseits sollte die Verweilzeit aber eine maximale Zeit nicht überschreiten, da ein spezifischer Anteil der organischen Komponente als Brennmittel für die Schmelze erforderlich ist, um den Recyclingprozess energietechnisch im optimalen Bereich betreiben zu können.

In einer besonders vorteilhaften Ausführungsvariante wird die Schmelze durch Zuführen eines inerten Gases, vorzugsweise durch Zuführen von Stickstoff, in den Verbrennungs- und/oder Schmelzbereich gezielt gekühlt und ein energiegeladener inerter-Gasstrom gebildet. In diesem Zusammenhang ist besonders vorteilhaft vorgesehen, dass dieser energiegeladene inerte-Gasstrom den im oberen Teil des Schmelzreaktors gebildeten energie-haltigen Gasstrom in die thermische Nachverbrennungskammer überführt. Hierdurch wird zum einen erreicht, dass der Schmelzprozess optimal eingestellt und reguliert werden kann. Zum anderen wird die im Schmelzprozess freigesetzte Wärmeenergie nahezu vollständig zurückgewonnen.

Sofern Stickstoff als inertes Gas zum gezielten Kühlen eingesetzt wird, kann es - in Abhängigkeit der Temperatur im Schmelzreaktor - zur Bildung von NOX-Verbindungen kommen. Um die Bildung von NOX-Verbindungen zu reduzieren kann die Temperatur im Schmelzreaktor derart eingestellt werden, dass der Pyrolysebereich eine Temperatur von maximal 1200 °C nicht überschreitet. Alternativ können die NOX-Verbindungen in einer katalytischen SCR-Einheit, die beispielsweise der Nachverbrennungskammer nachgeschaltet ist, reduziert werden.

Das erfindungsgemäße Verfahren ist zur pyrometallurgischen Verarbeitung von organik-haltigen Schrotten vorgesehen. Als organik-haltiger Schrott wird im Sinne der vorliegenden Erfindung jeglicher Schrott verstanden, der eine organische Komponente umfasst. Bevorzugte organik-haltige Schrotte sind ausgewählt aus der Reihe umfassend Elektroschrotte, Autoschredderschrotte und/oder Transformatorenschredderschrotte, insbesondere Schredderleichtfraktionen und/oder Mischungen hiervon.

Unter dem Begriff "Elektroschrott" werden im Sinne der vorliegenden Erfindung elektronische Altgeräte verstanden, die entsprechend der EU-Richtlinie 2002/96/EG definiert sind. Von dieser Richtlinie erfasste Gerätekategorien betreffen ganze und/oder (teil-)zerlegte Haushaltsgroßgeräte; Haushaltskleingeräte; IT- und Telekommunikationsgeräte; Geräte der Unterhaltungselektronik; Beleuchtungskörper; elektrische und elektronische Werkzeuge (mit Ausnahme ortsfester industrieller Großwerkzeuge); elektrische Spielzeuge sowie Sport- und Freizeitgeräte; medizinische Geräte (mit Ausnahme aller implantierten und infizierten Produkte); Überwachungs- und Kontrollinstrumente; sowie automatische Ausgabegeräte. Hinsichtlich der einzelnen Produkte, die in die entsprechenden Gerätekategorie fallen wird auf den Anhang IB der Richtlinie verwiesen.

Derartige Elektroschrotte umfassen im Wesentlichen kohlenwasserstoffhaltige Komponenten, wie insbesondere Kunststoffe sowie metallische Komponenten, wie insbesondere die Elemente ausgewählt aus der Reihe umfassend Kupfer, Nickel, Blei, Zinn, Zink, Gold, Silber, Antimon, Palladium, Indium, Gallium, Rhenium, Titan, Aluminium und/oder Yttrium.

Dabei ist der Elektroschrott der Mischung derart konfiguriert, dass dieser vorzugsweise einen Aluminiumgehalt von wenigstens 0.1 Gew.-%, mehr bevorzugt einen Aluminiumgehalt von wenigstens 0.5 Gew.-%, noch mehr bevorzugt einen Aluminiumgehalt von wenigstens 1.0 Gew.-% und am meisten bevorzugt einen Aluminiumgehalt von wenigstens 3.0 Gew.-% enthält. Hinsichtlich des maximalen Gehalts ist der Elektroschrott limitiert, da ein zu hoher Aluminiumgehalt sich nachteilig auf die Viskosität und somit die Fließfähigkeit der Schlackenphase als auch auf das Trennverhalten zwischen der metallischen Phase und der Schlackenphase auswirkt. Daher enthält der Elektroschrott bevorzugt höchstens 20 Gew.-% Aluminium, mehr bevorzugt höchstens 15 Gew.-% Aluminium, noch mehr bevorzugt höchstens 11 Gew.-% Aluminium und am meisten bevorzugt höchstens 8 Gew.-% Aluminium.

Die Chargierung und damit der Energieeintrag in den Schmelzreaktor kann durch unterschiedliche Korngrößen und insbesondere durch zu große Korngrößen ungleichmäßig sein, so dass sich hierdurch ungewünschte Zustände während des Schmelzvorgangs ausbilden. Daher wird der Elektroschrott vorzugsweise in zerkleinerter Form zugeführt. Vorteilhafterweise wird der Elektroschrott auf eine Korngröße kleiner 20.0 Zoll, mehr bevorzugt auf eine Korngröße kleiner 15.0 Zoll, noch mehr bevorzugt auf eine Korngröße kleiner 12.0 Zoll, weiterhin bevorzugt auf eine Korngröße kleiner 10.0 Zoll, weiterhin bevorzugt auf eine Korngröße kleiner 5.0 Zoll und ganz besonders bevorzugt auf eine Korngröße kleiner 2.0 Zoll zerkleinert. Allerdings sollte eine Korngröße von 0.1 Zoll, vorzugsweise eine Korngröße von 0.5 Zoll, mehr bevorzugt eine Korngröße von 1.5 Zoll nicht unterschritten werden.

Die Mischung umfassend den organik-haltigen Schrott kann einen definierten organischen Gehalt umfassen. Der Gehalt an den kohlenwasserstoff-haltigen Komponenten darf allerdings nicht zu klein sein, da es ansonsten zu keiner ausreichenden Pyrolyse- und/oder Verbrennungsreaktion kommt. Daher beträgt der Anteil an der kohlenwasserstoff-haltigen Komponente bevorzugt mindestens 10 Gew.-%, mehr bevorzugt mindestens 15 Gew.-%, am meisten bevorzugt 20 Gew.-%. Hinsichtlich des maximalen Gehalts ist der organik-haltige Schrott der Mischung limitiert und beträgt daher bevorzugt maximal 98 Gew-%, mehr bevorzugt maximal 90 Gew.-%, noch mehr bevorzugt maximal 80 Gew.-%, weiter bevorzugt maximal 70 Gew.-% und am meisten bevorzugt maximal 60 Gew.-%.

Vorteilhafterweise wird der Schritt ii) des erfindungsgemäßen Verfahrens durch selektives Einblasen eines sauerstoffhaltigen-Gases unterstützt. Die Reaktion wird daher derart eingestellt, dass keine vollständige Verbrennung der Kohlenwasserstoffe zu CO₂ und H₂O erfolgt, sondern ebenfalls Gehalte an CO, H₂ im Prozessgas ausgebildet werden. Hierdurch kann die Verbrennung der organischen Komponenten gezielt geregelt werden, wobei die dabei freiwerdende thermische Energie den Schritt iv) des Prozesses unterstützt.

Der in der thermischen Nachverbrennungskammer gebildete Abgasstrom wird anschließend einer katalytischen SCR-Einheit und/oder einer Filtereinrichtung zugeführt.

**In** einem weiteren Aspekt betrifft die vorliegende Erfindung zudem eine Anlage zur Gewinnung von Nichteisenmetallen, insbesondere von Schwarz- und/oder Rohkupfer, aus organik-haltigen Schrotten. Die Anlage umfasst:
i) einen Schmelzreaktor, wobei der Schmelzreaktor derart konfiguriert ist, dass dieser zumindest einen Schmelzbereich, einen Verbrennungsbereich sowie einen Pyrolysebereich aufweist,
ii) eine thermische Nachverbrennungskammer, in der ein energie-haltiger Gasstrom vollständig verbrennbar ist, und
iii) eine Energierückgewinnungseinheit, über die eine bei einer Verbrennung freigesetzte Wärmeenergie abführbar ist.

Als Schmelzreaktor ist vorzugsweise ein metallurgisches Gefäß vorgesehen, wie beispielsweise ein Schachtofen, ein Badschmelzreaktor, ein Peirce-Smith Converter oder ein kippbarer Rotationskonverter, insbesondere ein sog. Top Blowing Rotary Converter (TBRC), oder ein kippbarer Standkonverter. **In** einer vorteilhaften Ausführungsvariante umfasst das metallurgische Gefäß eine erste Abstichöffnung zum Abstechen der metallischen Phase und/oder eine zweite Abstichöffnung zum Abstechen der Schlackenphase. Die Abstichöffnung zum Abstechen der metallischen Phase ist dabei vorteilhafterweise im Boden und/oder in der Seitenwand des entsprechenden Schmelzreaktors angeordnet, so dass sie über diese entnommen werden kann.

Zum Zuführen des sauerstoffhaltigen-Gases und/oder des inerten Gases, vorzugsweise Stickstoff, umfasst der Schmelzreaktor vorzugsweise zumindest einen oder mehrere Injektoren, die in Höhe des Verbrennungsbereichs und/oder des Schmelzbereichs angeordnet sind.

Weiterhin umfasst die Anlage vorteilhaft eine stromabwärts der Nachverbrennungskammer angeordnete katalytische SCR-Einheit und/oder eine Filtereinrichtung.

Die Erfindung sowie das technische Umfeld werden nachfolgend anhand von Figuren und Beispielen näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:

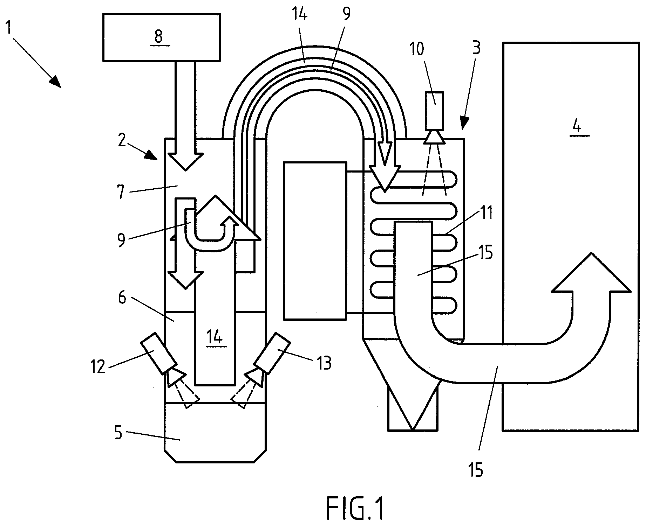

Fig. 1 eine Ausführungsvariante der erfindungsgemäßen Anlage in einer stark vereinfachten schematischen Darstellung, anhand derer das erfindungsgemäße Verfahren erläutert wird.

Die Anlage 1 ist zur Durchführung des erfindungsgemäßen Verfahrens ausgebildet, welches zur Gewinnung von Schwarz- und/oder Rohkupfer aus organik-haltigen Schrotten vorgesehen ist, wobei ebenfalls Anteile an Silber (Ag), Gold (Au), Platin (Pt) und Palladium (Pd) erhalten werden können.

Die Anlage 1 umfasst einen Schmelzreaktor 2, eine thermische Nachverbrennungskammer 3 sowie eine Filtereinrichtung 4. Der Schmelzreaktor 2 ist vorliegend in Form eines Schachtofens ausgeführt und weist einen Schmelzbereich 5, einen Verbrennungsbereich 6 sowie einen Pyrolysebereich 7 auf.

In einem ersten Prozessschritt wird zunächst eine zerkleinerte Mischung aus 100 Gew.-% eines organik-haltigen Schrottes 8 einer Schredderleichtfraktion (SLF) in den Schmelzreaktor 2 durch eine obige Öffnung (nicht dargestellt) zugeführt. Der zerkleinerte organik-haltige Schrott 8 weist hierbei eine mittlere Korngröße von 1.0 bis 5.0 Zoll auf, wobei prozessbedingt kleinere Korngrößen und/oder Stäube unvermeidbar sind und somit mitenthalten sein können.

Der dem Schmelzreaktor 2 zugeführte organik-haltige Schrott 8 passiert zunächst den Pyrolysebereich 7 sowie den Verbrennungsbereich 6. In dem Pyrolysebereich 7 herrscht eine Temperatur im Bereich von 900 ° bis 1200 °C. Von dem organik-haltigen Schrott 8, der dem Schmelzreaktor zugegeben wird, wird im Pyrolysebereich 7 ein Anteil von 10 - 50 Gew.-% der organischen Komponente pyrolysiert und ein energie-haltiger Gasstrom 9 gebildet. Wie anhand der Figur 1 dargestellt, wird dieser sodann der thermischen Nachverbrennungskammer 3 zugeführt und unter Einsatz eines Brenners 10 vollständig verbrannt, wobei die bei der Verbrennung freigesetzte Wärmeenergie über eine Energierückgewinnungseinheit 11, die einen Verdampfer umfasst, abgeführt wird. Als Brennmittel für den Brenner 10 wird vorteilhafterweise Wasserstoff verwendet, der aus erneuerbaren Energiequellen hergestellt worden ist (ein sog. grüner Wasserstoff).

Der zumindest zu einem Teil vorpyrolisierte und/oder verbrannte organik-haltige Schrott 8 wird sodann in dem Schmelzreaktor 2 eingeschmolzen. Die Verbrennungsreaktion kann hierbei gezielt durch die Zugabe von Sauerstoff, die dem Schmelzreaktor 2 über einen Sauerstoffinjektor 12 zugeführt wird, geregelt werden. Der Volumenstrom des Sauerstoffs wird derart angepasst, dass an der Oberfläche der Schmelze stets eine reduzierende Atmosphäre herrscht und keine vollständige Verbrennung des organischen Anteils zu CO₂ und H₂O erfolgt, sondern spezifische Gehalte an CO sowie H₂ im Prozessgas vorhanden sind, die ebenfalls der thermischen Nachverbrennungskammer 3 zugeführt und verbrannt werden.

Über den Injektor 12 kann weiterhin ein inertes Gas, wie beispielsweise Stickstoff, in den Verbrennungs- und/oder den Schmelzbereich 5, 6 gezielt eingebracht werden. Hierdurch wird die Schmelze gekühlt und ein energiegeladener inerter-Gasstrom 14 gebildet. Wie anhand der schematischen Darstellung gezeigt, überführt der energiegeladene inerte-Gasstrom 14 den im oberen Teil des Schmelzreaktors 2 gebildeten energie-haltigen Gasstrom 9 in die thermische Nachverbrennungskammer 3. Der in der thermischen Nachverbrennungskammer 3 gebildete Abgasstrom 15 wird anschließend der Filtereinrichtung 4 zugeführt.

### Bezugszeichenliste

- 1: Anlage
- 2: Schmelzreaktor
- 3: thermische Nachverbrennungskammer
- 4: Filtereinrichtung
- 5: Schmelzbereich
- 6: Verbrennungsbereich
- 7: Pyrolysebereich
- 8: Elektroschrott
- 9: Energie-haltiger Gasstrom
- 10: Brenner
- 11: Wärmetauscher
- 12: Injektor
- 13: inerter Gasstrom
- 14: Abgas
- 15: Abgasstrom

## Patentansprüche

1. Verfahren zur Gewinnung von Nichteisenmetallen, insbesondere von Schwarz- und/oder Rohkupfer, aus organik-haltigen Schrotten (8), umfassend die Schritte:
i) Bereitstellen eines Schmelzreaktors (2), wobei der Schmelzreaktor (2) derart konfiguriert ist, dass dieser zumindest einen Schmelzbereich (5), einen Verbrennungsbereich (6) sowie einen Pyrolysebereich (7) aufweist,
ii) Beschicken des Schmelzreaktors (2) mit einer Mischung umfassend den organik-haltigen Schrott (8), derart, dass dieser vor dem Erreichen des Schmelzbereiches (5) zunächst den Pyrolysebereich (7) und den Verbrennungsbereich (6) passiert und zumindest zu einem Teil vorpyrolisiert und/oder verbrannt wird, so dass ein energie-haltiger Gasstrom (9) gebildet wird,
iii) Überführen des energie-haltigen Gasstroms (9) in eine thermische Nachverbrennungskammer (3), in der der energie-haltige Gasstrom (9) vollständig verbrannt und die bei der Verbrennung freigesetzte Wärmeenergie über eine Energierückgewinnungseinheit (11) abgeführt wird, und
iv) Einschmelzen des zumindest zu einem Teil vorpyrolisierten und/oder verbrannten organik-haltigen Schrottes (8).

2. Verfahren nach Anspruch 1, wobei die Schmelze durch Zuführen eines inerten Gases in den Verbrennungs- und/oder Schmelzbereich (5, 6) gekühlt und ein energiegeladener inerter-Gasstrom (14) gebildet wird.

3. Verfahren nach Anspruch 2, wobei der energie-haltige Gasstrom (9) mittels des energiegeladenen inerten-Gasstrom (14) in die thermische Nachverbrennungskammer (3) überführt wird.

4. Verfahren nach einem der vorhergehenden Ansprüche, wobei der organik-haltige Schrott (8) dem Schmelzreaktor (2) im Gegenstrom zum energiegeladenen inerten-Gasstrom (14) zugeführt wird.

5. Verfahren nach einem der vorhergehenden Ansprüche, wobei der Pyrolysebereich (7) eine Temperatur von mindestens 180 °C, vorzugsweise eine Temperatur von mindestens 420 °C, mehr bevorzugt eine Temperatur von mindestens 800 °C, und am meisten bevorzugt eine Temperatur von mindestens 900 °C aufweist.

6. Verfahren nach einem der vorhergehenden Ansprüche, wobei der organik-haltige Schrott (8) gemäß Schritt ii) in zerkleinerter Form zugeführt wird.

7. Verfahren nach einem der vorhergehenden Ansprüche, wobei die Mischung umfassend den organik-haltigen Schrott (8) einen organischen Gehalt von mindestens 10 Gew.-% aufweist.

8. Verfahren nach einem der vorhergehenden Ansprüche, wobei der in der thermische Nachverbrennungskammer (3) gebildete Abgasstrom (15) einer Filtereinrichtung (4) zugeführt wird.

9. Verfahren nach einem der vorhergehenden Ansprüche, wobei der Schritt ii) durch selektives Einblasen eines sauerstoffhaltigen-Gases unterstützt wird.

10. Anlage (1) zur Gewinnung von Nichteisenmetallen, insbesondere von Schwarz- und/oder Rohkupfer, aus organik-haltigen Schrotten (8), umfassend:
i) einen Schmelzreaktor (2), wobei der Schmelzreaktor (2) derart konfiguriert ist, dass dieser zumindest einen Schmelzbereich (5), einen Verbrennungsbereich (6) sowie einen Pyrolysebereich (7) aufweist,
ii) eine thermische Nachverbrennungskammer (3), in der ein energie-haltige Gasstrom (9) vollständig verbrennbar ist, und
iii) eine Energierückgewinnungseinheit (11), über die eine bei der Verbrennung freigesetzte Wärmeenergie abführbar ist.

11. Anlage (1) nach Anspruch 10, weiterhin umfassend zumindest einen Injektor (12, 13) zum Zuführen eines sauerstoffhaltigen-Gases und/oder eines inerten Gases.

12. Anlage (1) nach Anspruch 10 oder 11, weiterhin umfassend eine Filtereinrichtung (4).

## Claims

1. Method of obtaining non-ferrous metals, particularly black and/or raw copper, from scrap materials (8) with organic content, comprising the steps:
i) providing a smelting reactor (2), wherein the smelting reactor (2) is configured in such a way that it has at least one melting region (5), combustion region (6) and pyrolysis region (7),
ii) charging the smelting reactor (2) with a mixture comprising the scrap (8) with organic content in such a way that the scrap prior to reaching the melting region (5) initially passes through the pyrolysis region (7) and the combustion region (6) and is at least in part pre-pyrolysed and/or combusted so that a gas flow (9) with energy content is formed,
iii) transferring the gas flow (9) with energy content to a thermal post-combustion chamber (3) in which the gas flow (9) with energy content is completely combusted and the thermal energy liberated during the combustion is discharged by way of an energy recovery unit (11), and
iv) melting the at least in part pre-pyrolysed and/or combusted scrap (8) with organic content.

2. Method according to claim 1, wherein the melt is cooled by feed of an inert gas to the combustion region (6) and/or melting region (5) and an energy-laden inert gas flow (14) is formed.

3. Method according to claim 2, wherein the gas flow (9) with energy content is transferred by means of the energy-laden inert gas flow (14) to the thermal post-combustion chamber (3).

4. Method according to any one of the preceding claims, wherein the scrap (8) with organic content is fed to the smelting reactor (2) in counter-flow to the energy-laden inert gas flow (14).

5. Method according to any one of the preceding claims, wherein the pyrolysis region (7) has a temperature of at least 180° C, preferably a temperature of at least 420° C, more preferably a temperature of at least 800° C and most preferably a temperature of at least 900° C.

6. Method according to any one of the preceding claims, wherein the scrap (8) with organic content is fed in accordance with step ii) in comminuted form.

7. Method according to any one of the preceding claims, wherein the mixture comprising the scrap (8) with organic content has an organic content of at least 10 weight %.

8. Method according to any one of the preceding claims, wherein the waste gas flow (15) formed in the thermal post-combustion chamber (3) is fed to a filter device (4).

9. Method according to any one of the preceding claims, wherein the step ii) is assisted by selective blowing in of a gas with oxygen content.

10. Plant (1) for obtaining non-ferrous metals, particularly black and/or raw copper, from scrap materials (8) with organic content, comprising:
i) a smelting reactor (2), wherein the smelting reactor (2) is configured in such a way that this has at least one melting region (5), combustion region (6) and pyrolysis region (7),
ii) a thermal post-combustion chamber (3) in which a gas flow (9) with energy content can be completely combusted and
(iii) an energy recovery unit (11) by way of which a thermal energy liberated during the combustion can be discharged.

11. Plant (1) according to claim 10, further comprising at least one injector (12, 13) for feeding a gas with oxygen content and/or an inert gas.

12. Plant (1) according to claim 10 or 11, further comprising a filter device (4).

## Revendications

1. Procédé de récupération de métaux non ferreux, en particulier de cuivre noir et/ou de cuivre brut, à partir de ferrailles contenant des matières organiques (8), comprenant les étapes :
i) de fourniture d'un réacteur de fusion (2), le réacteur de fusion (2) étant configuré de telle sorte que celui-ci présente au moins une zone de fusion (5), une zone de combustion (6) ainsi qu'une zone de pyrolyse (7),
ii) de chargement du réacteur de fusion (2) avec un mélange comprenant la ferraille contenant des matières organiques (8), de telle sorte que celle-ci, avant d'atteindre la zone de fusion (5), traverse d'abord la zone de pyrolyse (7) et la zone de combustion (6) et soit au moins en partie pré-pyrolysée et/ou brûlée, de sorte qu'un flux de gaz contenant de l'énergie (9) soit formé,
iii) de transfert du flux de gaz contenant de l'énergie (9) dans une chambre de postcombustion thermique (3), dans laquelle le flux de gaz contenant de l'énergie (9) est entièrement brûlé et l'énergie thermique libérée lors de la combustion est évacuée par l'intermédiaire d'une unité de récupération d'énergie (11), et
iv) de fusion de la ferraille contenant des matières organiques (8) au moins en partie pré-pyrolysée et/ou brûlée.

2. Procédé selon la revendication 1, dans lequel la masse fondue est refroidie par amenée d'un gaz inerte dans la zone de combustion et/ou de fusion (5, 6) et un flux de gaz inerte chargé d'énergie (14) est formé.

3. Procédé selon la revendication 2, dans lequel le flux de gaz contenant de l'énergie (9) est transféré au moyen du flux de gaz inerte chargé d'énergie (14) dans la chambre de postcombustion thermique (3).

4. Procédé selon l'une des revendications précédentes, dans lequel la ferraille contenant des matières organiques (8) est amenée au réacteur de fusion (2) à contre-courant du flux de gaz inerte chargé d'énergie (14).

5. Procédé selon l'une des revendications précédentes, dans lequel la zone de pyrolyse (7) présente une température d'au moins 180 °C, de préférence une température d'au moins 420 °C, plus préférentiellement une température d'au moins 800 °C, et de manière la plus préférée une température d'au moins 900 °C.

6. Procédé selon l'une des revendications précédentes, dans lequel la ferraille contenant des matières organiques (8) selon l'étape ii) est amenée sous forme broyée.

7. Procédé selon l'une des revendications précédentes, dans lequel le mélange comprenant la ferraille contenant des matières organiques (8) présente une teneur en matières organiques d'au moins 10 % en poids.

8. Procédé selon l'une des revendications précédentes, dans lequel le flux de gaz résiduaire (15) formé dans la chambre de postcombustion thermique (3) est acheminé vers un dispositif de filtration (4).

9. Procédé selon l'une des revendications précédentes, dans lequel l'étape ii) est assistée par insufflation sélective d'un gaz contenant de l'oxygène.

10. Installation (1) de récupération de métaux non ferreux, en particulier de cuivre noir et/ou de cuivre brut, à partir de ferrailles contenant des matières organiques (8), comprenant :
i) un réacteur de fusion (2), le réacteur de fusion (2) étant configuré de telle sorte que celui-ci présente au moins une zone de fusion (5), une zone de combustion (6) ainsi qu'une zone de pyrolyse (7),
ii) une chambre de postcombustion thermique (3), dans laquelle un flux de gaz contenant de l'énergie (9) peut être entièrement brûlé, et
iii) une unité de récupération d'énergie (11), par l'intermédiaire de laquelle une énergie thermique libérée lors de la combustion peut être évacuée.

11. Installation (1) selon la revendication 10, comprenant en outre au moins un injecteur (12, 13) pour amener un gaz contenant de l'oxygène et/ou un gaz inerte.

12. Installation (1) selon la revendication 10 ou 11, comprenant en outre un dispositif de filtration (4).
